# EUROPÄISCHE PATENTSCHRIFT

(11) **EP 0 385 076 B1**
(45) Veröffentlichungstag und Bekanntmachung des Hinweises auf die Patenterteilung: **20.07.1994**
(21) Anmeldenummer: 90100818.5
(22) Anmeldetag: 16.01.1990
(51) Int. Cl.: B27K 3/50

(54) **Mittel oder Konzentrat zum Konservieren von Holz oder Holzwerkstoffen**
Agent or concentrate for the preservation of wood or wooden materials
Agent ou concentrat de préservation du bois ou des matériaux en bois

(30) Priorität: 02.03.1989 DE 3906556
(43) Veröffentlichungstag der Anmeldung: 05.09.1990
(60) Teilanmeldung: 93110978.9
(73) Patentinhaber: DESOWAG Materialschutz GmbH, D-40417 Düsseldorf (DE)
(72) Erfinder: Metzner, Wolfgang, Dr., D-4150 Krefeld (DE); Naczinski, Luzian, D-4005 Meerkamp-Lank (DE); Wegen, Hans-Werner, Dr., D-4150 Krefeld (DE)
(74) Vertreter: Lauer, Dieter, Dr.

(56) Entgegenhaltungen:
- EP-A- 0 007 589
- EP-A- 0 254 857
- EP-A- 0 269 817

## Beschreibung

Die vorliegende Erfindung betrifft ein Mittel oder Konzentrat zum Konservieren von Holz und Holzwerkstoffen auf der Basis von oder unter Mitverwendung von 1-Aryl-3-hydroxy-3-alkyl-4-(1,2,4-triazol-1-yl)-butanderivaten der Formel 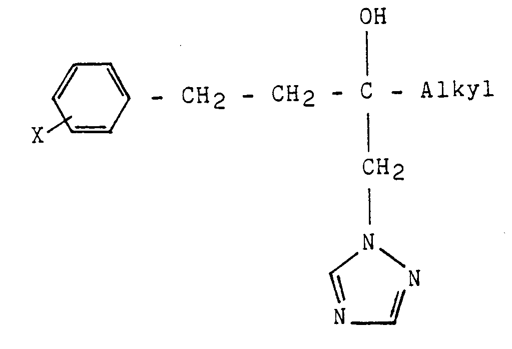
in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe und mindestens eines Lösungsmittels, Verdünnungsmittels und/oder Zusatzmittels.

Die genannten 1-Aryl-3-hydroxy-3-alkyl-4-(1,2,4-triazol-1-yl)-butanderivate sind aus der DE-OS 36 21 494 bekannt und finden als fungizid wirkende Mittel zum Schutz technischer Materialien vor Schädigung oder Zerstörung durch Mikroorganismen Verwendung.

An Holzkonservierungsmittel werden aber Anforderungen gestellt, die über die reine fungzide Wirksamkeit hinausgehen.

Aus EP-A-0269 817 ist ein Holzkonservierungsmittel bekannt, das aus 1-[[2-(2,4-dichlorphenyl)-1,3dioxolan-2-yl]methyl] -1H-1,2,4-triazol und Cyano-(4-fluoro-3-phenoxyphenyl)-methyl -3-(2,2-dichloroethenyl)-2,2-dimethylcyclopropancarboxylat, (Pentafluorphenyl)-methyl))-1R,3R-3-(2,2-dichlorethenyl) -2,2-dimethylcyclopropancarboxylat, Methylbisthiocyanat, N,N-Dimethyl-N'-penyl-N'(fluordichlormethyl-thio)-sulfamid oder N,N-Dimethyl-N'-p-tolyl-N'-(dichlorfluormethylthio)-sulfamid und einem Gemisch aus mindestens einem Verdünnungsmittel und/oder mindestens einem Emulgator und/oder Netzmittel oder -gemisch derselben besteht.

Ziel und Aufgabe der vorliegenden Erfindung war es daher, ein Holzkonservierungsmittel zu finden, das gegenüber holzverfärbenden und holzzerstörenden Pilzen sowie gegenüber holzschädigenden Insekten, insbesondere gegenüber holzzerstörenden Bockkäfern (Cerambycidae, Lyctidae, Bostrychidae und Anobiidae) einschließlich Termiten hochwirksam ist und eine gute Langzeitwirkung aufweist, wobei die Wirksamkeit des Fungizides durch das Insektizid nicht beeinträchtigt wird bzw. umgekehrt. Darüber hinaus sollte das Holzkonservierungsmittel ein gutes Eindringvermögen im Holz und in den Holzwerkstoffen aufweisen.

Erfindungsgemäß wurde festgestellt, daß diesen Zielen und Aufgaben ein Mittel oder Konzentrat zum Konservieren von Holz und Holzwerkstoffen gerecht wird, das 0,05 - 25 Gew.-% des 1-Aryl-3-hydroxy-3-alkyl-4-(1,2,4-triazol-1-yl)-butanderivats der Formel 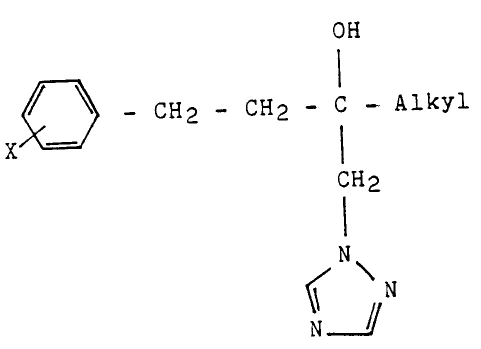
in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe, 0,002 - 5 Gew.-% Cyano-(4-fluoro-3-phenoxyphenyl)-methyl-3-(2,2-dichlorethenyl)-2,2-dimethylcyclopropancarboxylat, (±)α-Cyano-3-phenoxybenzyl-(+)-cis, trans-3-(2,2-dichlorvinyl)-2,2-dimethylcyclopropancarboxylat, (S)-α-Cyano-3-phenoxybenzyl(1R,3R)-3(2,2-dibromvinyl)-2,2-dimethylcyclopropancarboxylat oder 3-Phenoxybenzyl-(±)-cis-trans-3-(2,2-dichlorvinyl)2,2-dimethylcyclopropancarboxylat oder enatiomere Verbindungen derselben als Insektizid (Pyrethroid) und mehr als 40 Gew.-% eines Gemisches aus Lösungs- und/oder Verdünnungsmittel und/oder organisch-chemisches Bindemittel oder Fixierungsmittel, Verarbeitungshilfsmittel, Farbstoff, Pigment, Farbstoff- oder Pigmentgemisch enthält.

Das Lösungs- und/oder Verdünnungsmittel enthält ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und mindestens einen Emulgator und/oder Netzmittel oder besteht daraus.

Bevorzugt enthält das erfindungsgemäße Mittel oder Konzentrat als 1-Aryl-3-hydroxy-3-alkyl-4-(1,2,4-triazol-1-yl)-butanderivat
1-(4-Fluor-)phenyl-3-hydroxy-3-tert.-butyl-4-(1,2,4-triazol-1-yl)-butan,
1-(4-Chlor-)phenyl-3-hydroxy-3-tert.-butyl-4-(1,2,4-triazol-1-yl)-butan oder
1-(4-Brom-)phenyl-3-hydroxy-3-tert.-butyl-4-(1,2,4-triazol-1-yl)-butan.

Als organisch-chemische Lösungsmittel werden vorzugsweise ölige oder ölartige Lösungsmittel mit einer Verdunstungszahl über 35 und einem Flammpunkt oberhalb 30 °C, vorzugsweise oberhalb 45 °C, eingesezt. Als derartige schwerflüchtige, wasserunlösliche, ölige oder ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 - 220 °C, Testbenzin mit einem Siedebereich von 170 - 220 °C, Spindelöl mit einem Siedebereich von 250 °C - 350 °C, Petroleum bzw. Aromaten vom Siedebereich 160 - 280 °C, Terpentinöl und dgl. zum Einsatz.

In einer Ausführungsform wurden flüssige aliphatische Kohlenwasserstoffe mit einem Siedebereich von 180 - 210 °C oder hochsiedende Gemische von aromatischen und aliphatischen Kohlenwasserstoffen mit einem Siedebereich von 180 bis ca. 220 °C und/oder Spindelöl und/oder Monochlornaphthalin, vorzugsweise α-Monochlornaphthalin, verwendet.

Die organischen schwerflüchtigen öligen oder ölartigen Lösungsmittel mit einer Verdunstungszahl über 35 und einem Flammpunkt oberhalb 30 °C, vorzugsweise oberhalb 45 °C, können teilweise durch leicht oder mittelflüchtige organisch-chemische Lösungsmittel ersetzt werden, mit der Maßgabe, daß das Lösungsmittelgemisch ebenfalls eine Verdunstungszahl über 35 und einen Flammpunkt oberhalb 30 °C, vorzugsweise oberhalb 45 °C, aufweist und daß das Insektizid-Fungizid-Gemisch in diesem Lösungsmittelgemisch löslich oder emulgierbar ist.

Nach einer bevorzugten Ausführungsform wird ein Teil des organisch-chemischen Lösungsmittels oder Lösungsmittelgemisches durch ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycoläther, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z. B. Polyvinylacetat, Polyesterharz, Polykondensations-oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemisches Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das organisch-chemische Bindemittel oder Bindemittelgemisch kann ganz, vorzugsweise teilweise durch mindestens ein Fixierungsmittel oder mindestens einen Weichmacher ersetzt werden.

Dabei ist das organisch-chemische Bindemittel oder Bindemittelgemisch von 0 bis zu 75 Gew.-%, vorzugsweise von 0,01 bis zu 35 Gew.-% (bezogen auf 100 Gew.-% eingesetztes Bindemittel, berechnet als Feststoff) durch die gleichen Gewichtsmengen mindestens eines Fixierungsmittels oder mindestens eines Weichmachers ersetzt.

Als Fixierungsmittel oder Weichmacher werden vor allem solche Verbindungen eingesetzt, die neben einer gewissen Bindung oder Haftung an den Wirkstoff zusätzlich eine Verflüchtigung der Wirkstoffe und/oder eine Kristallisation bzw. Ausfällung verhindern sollen, vorzugsweise
a) Weichmacher, z. B. Alkyl-, Aryl- oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)-adipat, Stearate und Oleate, z. B. Alkylstearate oder Alkyloleate, vorzugsweise Butyloleat, Butylstearat oder Amylstearat, Bis-(dimethylbenzyl)-äther, p-Toluolsulfonsäureäthylester, Glycerinester, Glycerinäther oder höhermolekulare Glykoläther und/oder
b) Fixierungsmittel auf der Basis von Ketonen und/oder Polyvinylalkyläthern, z. B. Ketone mit Alkyl-,Aryl- oder Aralkylgruppen, vorzugsweise Benzophenon, Äthylbenzophenon; Polyvinyläther, vorzugsweise Polyvinylmethyläther.

Nach einer bevorzugten Ausführungsform enthält das Mittel (anwendungsfertige Mittel) 0,2 bis 3 Gew.-%, vorzugsweise 0,5 bis 2 Gew.-% des 1-Aryl-3-hydroxy-3-alkyl-4-(1,2,4-triazol-1-yl)-butanderivates, 0,005 bis 1 Gew.-%, vorzugsweise 0,01 bis 0,5 Gew.-% des Pyrethroids und mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und einen Emulgator und/oder Netzmittel und ggf. 0 bis 5 Gew.-%, vorzugsweise 0,1 bis 3 Gew.-% Fixierungsmittel und/oder andere Zusatzmittel als Restbestandteil.

Nach einer anderen bevorzugten Ausführungsform enthält das Mittel (anwendungsfertige Mittel) 0,2 bis 3 Gew.-%, vorzugsweise 0,5 bis 2 Gew.-% des 1-Aryl-3-hydroxy-3-alkyl-4-(1,2,4-triazol-1-yl)-butanderivates, 0,005 bis 1 Gew.-%, vorzugsweise 0,01 bis 0,5 Gew.-% des Pyrethroids, 2 bis 30 Gew.-%, vorzugsweise 5 bis 22 Gew.-% berechnet als Feststoff, eines Kunstharzbindemittels, vorzugsweise ein Alkydharz und/oder ein trocknendes pflanzliches Öl
sowie mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und einen Emulgator und/oder Netzmittel
sowie ggf. Sikkative, Farbstoffe, Farbpigmente und/oder UV-Stabilisatoren als Restbestandteil.

Das erfindungsgemäße Konzentrat zum Konservieren von Holz und Holzwerkstoffen enthält nach einer vorzugsweisen Ausführungsform 0,2 bis 25 Gew.-%, vorzugsweise 3 bis 8 Gew.-%, des 1-Aryl-3-hydroxy3-alkyl-4-(1,2,4-triazol-1-yl)-butanderivates, 0,05 bis 5 Gew.-%, vorzugsweise 0,5 bis 1 Gew.-% des Pyrethroids und 5 bis 40 Gew.-%, vorzugsweise 10 bis 30 Gew.-%, (berechnet als Feststoff) mindestens eines organisch-chemischen Bindemittels und/oder Fixierungsmittels oder Weichmachers
sowie zusätzlich ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder ein Penetrationshilfsmittel und/oder Wasser und einen Emulgator und/oder Netzmittel als Restbestandteil.

Das Mittel oder Konzentrat enthält nach einer Ausführungsform als Emulgator oder Emulgatorgemisch mindestens ein eine Seitengruppe enthaltendes äthoxyliertes Phenol, vorzugsweise ein äthoxyliertes Nonylphenol und/oder eine äthoxylierte Fettsäure.

Das Konzentrat und das daraus hergestellte Mittel zum Konservieren von Holz und Holzwerkstoffen enthält nach einer anderen Ausführungsform ein Gemisch von Emulgatoren mit unterschiedlicher Kettenlänge, von denen mindestens ein Emulgator eine äthoxylierte Seitenkette von weniger als 10 Äthoxygruppen und von denen mindestens ein anderer Emulgator eine äthoxylierte Seitenkette von mehr als 10 Äthoxygruppen besitzt.

Vorteilhaft enthält das Konzentrat und das Mittel als wasserverdünnbares Kunstharz ein Alkydharz, das eine mittlere Öllänge besitzt. Durch die Verwendung dieses Kunstharzes wird trotz des geringen Anteiles des organisch-chemischen Lösungsmittels, z. B. auf Erdölbasis, erreicht, daß einerseits eine bessere Fixierung der Wirkstoffe erzielt und andererseits je nach Kunstharzanteil eine Filmbildung ermöglicht wird.

Nach einer vorzugsweisen Ausführungsform ist das erfindungsgemäße Mittel oder Konzentrat frei von aromatischen Oxyalkoholen.

Das erfindungsgemäße Mittel oder Konzentrat zum Konservieren von Holz und Holzwerkstoffen gelangt gegenüber folgende holzzerstörende Insekten und holzzerstörende Pilze zum Einsatz:

### A. Holzzerstörende Insekten wie

A.1. Käfer:
   Hylotrupes bajulus, Chlorophorus pilosus, Anobium punctatum, Xestobium rufovillosum, Ptilinus pecticornis, Dendrobium pertinex, Ernobius mollis, Priobium carpini,
   Lyctus brunneus, Lyctus africanus, Lyctus planicollis, Lyctus linearis, Lyctus pubescens, Trogoxylon aequale, Minthea rugicollis,
   Xyleborus spec., Tryptodendron spec.,
   Apate monachus, Bostrychus capucins,
   Heterobostrychus brunneus, Sinoxylon spec, Dinoderus minutus.
A.2. Hautflügler
   Sirex juvencus, Urocerus gigas, Urocerus gigas taignus, Urocerus augur.
A.3. Termiten
   Kalotermes flavicollis, Cryptotermes brevis,
   Heterotermes indicola, Reticulitermes flavipes, Reticulitermes santonensis, Reticulitermes lucifugus,
   Mastotermes darwiniensis, Zootermopsis nevadensis,
   Coptotermes formosanus.

### B. Holzzerstörende Pilze wie

B.1. Basidiomyceten
   Coniophora puteana, Coriolus versicolor, Poria placenta, Poria monticola, Poria vaporaria, Poria vaillantii, Gloeophyllum sepiarium, Gloeophyllum adoratum, Gloeophyllum abietinum, Gloeophyllum trabeum, Gloeophyllum protactum, Lentinus lepideus, Lentinus edodes,
   Lentinus cyathiformes, Lentinus squarrolosus, Paxillus panuoides, Tyromyces palustris, Pleurotus ostreatus, Donkioporia expansa, Serpula lacrymans, Serpula himantoides, Glenospora graphii.
B.2. Deuteromyceten
   Cladosporium herbarum.
B.3. Ascomyceten
   Chaetomium globosum, Chaetomium alba-arenulum, Petriella setifera, Trichurus spiralis,
   Humicola grisea.

### C. Holzverfärbende Pilze wie

C.1. Deuteromyceten
   Aureobasidium pullulans, Sclerophoma pithyophila, Scopularia phycomyces, Aspergillus niger, Penicillium variabile, Trichoderma viride, Trichoderma lignorum, Dactyleum fusarioides.
C.2. Ascomyceten
   Caratocystis minor.
C.3. Zygomyceten
   Mucor spinosus.

### D. Versuchsergebnisse

D.1. Insektizide Prüfung
Prüfung der vorbeugenden Wirkung gegenüber Eilarven des Hausbockkäfers (Hylotrupes bajulus) nach Windkanalbeanspruchung und Abhobeln einer 2 mm-, 3 mm- und 4 mm-Schicht von den behandelten Holzflächen.
Die Prüfung erfolgte unter teilweiser Hinzuziehung der DIN EN 46.
Erfindungsgemäßes Holzkonservierungsmittel:

| | |
|---|---|
| 1-(4-Chlor-)phenyl-3-hydroxy-3-tert.-butyl-4-(1,2,4-triazol-1-yl)-butan | 1,50 % |
| Cyano-(-4-fluoro-3-phenoxyphenyl-methyl-3-(2,2-dichloro-ethenyl)-2,2-dimethylcyclopropancarboxylat (Cyfluthrin) | 0,05 % |
| Butyldiglykol | 3,00 % |
| Methoxypropylacetat | 1,50 % |
| organisch-chemisches Lösungsmittel (Gemisch aliphatischer und aromatischer Kohlenwasserstoffe) | 93,575 % |
| Farbstoff | 0,375 % |

| Aufgebrachte Menge an Holzkonservierungsmittel je m² Holzfläche | Abgehobelte Schicht (mm) | Versuchsdauer in Wochen | Anzahl und Zustand der Prüftiere | | | |
|---|---|---|---|---|---|---|
| | | | tot nicht eingenagt | eingenagt | eingenagt | lebend nicht eingenagt |
| 150 g | 2 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| 150 g | 3 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| 150 g | 4 | 4 | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| | | | 10 | 0 | 0 | 0 |
| unbehandelte Kontrollproben | | | 0 | 2 | 7 | 1 |
| | | | 0 | 0 | 9 | 1 |
| | | | 0 | 2 | 7 | 1 |
| | | | 1 | 0 | 7 | 2 |
| | | | 1 | 1 | 7 | 1 |
| | | | 1 | 1 | 8 | 0 |

D.2. Fungizide Prüfung
Erfindungsgemäßes Holzkonservierungsmittel wie unter D.1.
Bestimmung der Wirkungstiefe des Holzkonservierungsmittels gegenüber holzzerstörende Basidiomyceten nach Abhobeln.
Die Untersuchung der angestrichenen und vor dem Pilzversuch abgehobelten Holzklötzchen wurde in Anlehnung an EN 113 vorgenommen. Die Prüfkörper (Kiefernklötzchen mit den Abmessungen: 50 x 25 x 15 mm) wurden nach dem Darren und Wägen an den Hirnflächen abgedichtet. Auf die so vorbereiteten Klötzchen wurde das Holzkonservierungsmittel mit einer Menge von 150 g/m² aufgetragen. Anschließend lagerten die Hölzchen vier Wochen lang zur Trocknung und Konditionierung in einem Klimaraum bei 20 °C Lufttemperatur und 65 % Luftfeuchte. Einen Tag vor Beginn des Pilzversuchs wurde von allen vier Seiten der Probehölzer eine Schicht von 1 mm, 2 mm und 3 mm abgehobelt. Vor und nach dem Abhobeln werden die Gewichte der einzelnen Probehölzer festgestellt. Jeweils zwei der abgehobelten Klötzchen wurden einen Tag später auf Reinkulturen zweier holzzerstörender Basidiomyceten (Coniophora putea und Gloeophyllum trabeum) neben einem unbehandeltem Vergleichsklötzchen in Kolleschalen eingebaut und 16 Wochen lang dem Pilzangriff ausgesetzt.
Nachstehende Tabelle gibt den mittleren Gewichtsverlust und die Anzahl der angegriffenen Klötzchen wieder.

| Pilz | Abhobelschicht | Gew.-Verl. in % | Anzahl der angegr. Holzklötzchen |
|---|---|---|---|
| Gloeoph. trabeum | 0 mm | 0,7 | 0 |
| | 1 mm | 0,70 | 0 |
| | 2 mm | 1,4 | 0 |
| | 3 mm | 1,0 | 0 |
| unbehandelte Kontrollprobe | | 44,8 | alle |
| Coniophora puteana | 0 mm | 0,5 | 0 |
| | 1 mm | 0,9 | 0 |
| | 2 mm | 0,7 | 0 |
| | 3 mm | 0,9 | 0 |
| unbehandelte Kontrollprobe | | 52,7 | alle |

### Beispiele

| 1. Lasurartiges Holzkonservierungsmittel (farblos) | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100%ig) | 15,0 Gew.-% |
| Sikkative, Netzmittel, Antiabsetzmittel | 1,0 Gew.-% |
| Butyldiglykol | 3,0 Gew.-% |
| Lösungsmittel (Gemisch aus aromatischen und aliphatischen Kohlenwasserstoffen) | 78,94 Gew.-% |

| 2. Lasurartiges Holzkonservierungsmittel (farbig) | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100%ig) | 23,0 Gew.-% |
| Pigment | 3,0 Gew.-% |
| Sikkative, Netzmittel, Antiabsetzmittel | 1,0 Gew.-% |
| Butyldiglykol | 3,0 Gew.-% |
| Lösungsmittel (Gemisch aus aromatischen und aliphatischen Kohlenwasserstoffen) | 67,94 Gew.-% |

| 3. Holzkonservierungsmittel mit grundierender Wirkung | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz 100%ig | 7,0 Gew.-% |
| Butyldiglykol | 3,0 Gew.-% |
| Sikkative | 0,2 Gew.-% |
| Lösungsmittel (Gemisch aus aromatischen und aliphatischen Kohlenwasserstoffen) | 87,74 Gew.-% |

| 4. Holzkonservierungsmittel mit vorbeugender Wirkung für den Holzbau (farblos) | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,05 Gew.-% |
| Butyldiglykol | 3,0 Gew.-% |
| Methoxypropylacetat | 1,5 Gew.-% |
| Lösungsmittel (Gemisch aus aromatischen und aliphatischen Kohlenwasserstoffen) | 93,95 Gew.-% |

| 5. Holzkonservierungsmittel mit vorbeugender Wirkung für den Holzbau (farbig) | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,05 Gew.-% |
| Butyldiglykol | 3,0 Gew.-% |
| Methoxypropylacetat | 1,5 Gew.-% |
| Farbstoff (Fettbraun B) | 0,6 Gew.-% |
| Lösungsmittel (Gemisch aus aromatischen und aliphatischen Kohlenwasserstoffen) | 93,35 Gew.-% |

| 6. Holzkonservierungsmittel mit bekämpfender Wirkung | |
|---|---|
| 1-(4-Chlor-)phenyl-3-hydroxy-3-tert.-butyl-4-(1,2,4-triazol-1-yl)-butan | 2,0 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,1 Gew.-% |
| Butyldiglykol | 2,0 Gew.-% |
| Dibutylphthalat | 4,0 Gew.-% |
| Lösungsmittel (Gemisch aus aromatischen und aliphatischen Kohlenwasserstoffen) | 91,9 Gew.-% |

| 7. Konzentrat zum Konservieren von Holz und Holzwerkstoffen | |
|---|---|
| 1-(4-Chlor-)phenyl-3-hydroxy-3-tert.-butyl-4-(1,2,4-triazol-1-yl)-butan | 2,0 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,15 Gew.-% |
| Butyldiglykol | 2,0 Gew.-% |
| Alkydharz (100%ig) | 10,0 Gew.-% |
| Lösungsmittel (Gemisch aus aromatischen und aliphatischen Kohlenwasserstoffen) | 85,85 Gew.-% |

| 8. Konzentrat zum Konservieren von Holz und Holzwerkstoffen | |
|---|---|
| 1-(4-Chlor-)phenyl-3-hydroxy-3-tert.-butyl-4-(1,2,4-triazol-1-yl)-butan | 8,0 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,5 Gew.-% |
| Butyldiglykol | 5,0 Gew.-% |
| Alkydharz (100%ig) | 20,0 Gew.-% |
| Lösungsmittel (Gemisch aus aromatischen und aliphatischen Kohlenwasserstoffen) | 66,5 Gew.-% |

| 9. Konzentrat zum Konservieren von Holz und Holzwerkstoffen, wasserverdünnbar | |
|---|---|
| 1-(4-Chlor-)phenyl-3-hydroxy-3-tert.-butyl-4-(1,2,4-triazol-1-yl)-butan | 8,0 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,5 Gew.-% |
| Methyl-benzimidazol-2-yl-carbamat (Carbendazim) | 1,6 Gew.-% |
| Alkydharz (100%ig) | 30,0 Gew.-% |
| Emulgator | 10,0 Gew.-% |
| Wasser | 49,9 Gew.-% |

| 10. Lasurartiges Holzkonservierungsmittel, wasserverdünnbar | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenylmethyl-3-(2,2-dichloro-ethenyl)-2,2-dimethylcyclopropancarboxylat (Cyfluthrin) | 0,01 Gew.-% |
| Methyl-benzimidazol-2-yl-carbamat (Carbendazim) | 0,3 Gew.-% |
| Alkydharz (100%ig) | 20,0 Gew.-% |
| Emulgator | 3,0 Gew.-% |
| Pigmente | 3,0 Gew.-% |
| Sikkative, Netzmittel, Antiabsetzmittel | 1,0 Gew.-% |
| Butyldiglykol | 3,0 Gew.-% |
| Wasser | 68,19 Gew.-% |

## Patentansprüche

1. Mittel oder Konzentrat zum Konservieren von Holz und Holzwerkstoffen auf der Basis von oder unter Mitverwendung von 1-Aryl-3-hydroxy-3-alkyl-4-(1,2,4-triazol-1-yl)-butanderivaten der Formel 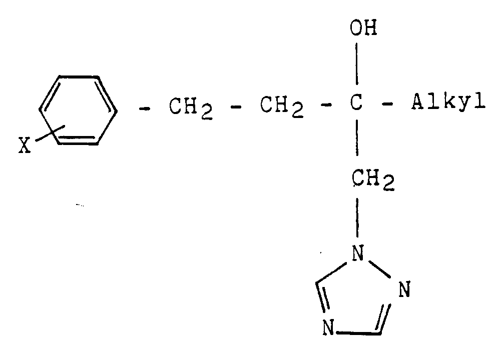 in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe und mindestens eines Lösungsmittels, Verdünnungsmittels und/oder Zusatzmittels, dadurch gekennzeichnet, daß das Mittel oder Konzentrat
0,05 - 25 Gew.-%
des 1-Aryl-3-hydroxy-3-alkyl-4-(1,2,4-triazol-1-yl)-butanderivats der Formel 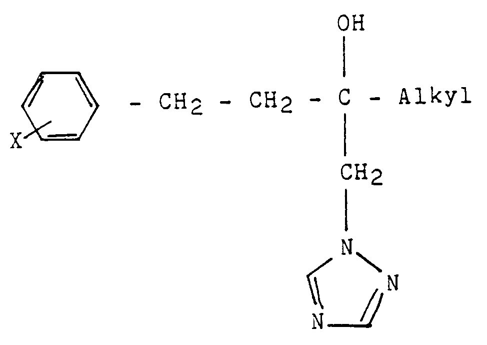 in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe,
0,002 - 5 Gew.-%
Cyano-(4-fluoro-3-phenoxyphenyl)-methyl-3-(2,2-dichlorethenyl)-2,2-dimethylcyclopropancarboxylat, (+) -Cyano-3-phenoxy-benzyl-(+)-cis, trans-3-(2,2-dichlorvinyl)-2,2-dimethylcyclopropancarboxylat, (S)- -Cyano-3-phenoxybenzyl(1R,3R)-3(2,2-dibromvinyl)-2,2-dimethylcyclopropancarboxylat oder 3-Phenoxybenzyl-(+)-cis-trans-3-(2,2-dichlorvinyl)2,2-dimethylcyclopropancarboxylat oder enantiomere Verbindungen derselben als Insektizid (Pyrethroid) und
mehr als 40 Gew.-%
eines Gemisches aus Lösungs- und/oder Verdünnungsmittel und/oder organisch-chemisches Bindemittel und/oder Fixierungsmittel, Verarbeitungshilfsmittel, Farbstoff, Pigment, Farbstoff- oder Pigmentgemisch enthält.

2. Mittel oder Konzentrat nach Anspruch 1, dadurch gekennzeichnet, daß das Lösungs- und/oder Verdünnungsmittel ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und mindestens einen Emulgator und/oder Netzmittel enthält oder daraus besteht.

3. Mittel oder Konzentrat zum Konservieren von Holz und Holzwerkstoffen nach Ansprüchen 1 oder2, dadurch gekennzeichnet, daß es als 1-Aryl-3-hydroxy-3-alkyl-4-(1,2,4-triazol-1-yl)-butanderivat
1-(4-Fluor-)phenyl-3-hydroxy-3-tert.-butyl-4-(1,2,4-triazol-1-yl)-butan,
1-(4-Chlor-)phenyl-3-hydroxy-3-tert.-butyl-4-(1,2,4-triazol-1-yl)-butan oder
1-(4-Brom-)phenyl-3-hydroxy-3-tert.-butyl-4-(1,2,4-triazol-1-yl)-butan
enthält.

4. Mittel zum Konservieren von Holz und Holzwerkstoffen nach einem oder mehreren der Ansprüche 1 bis 3, dadurch gekennzeichnet, daß das Mittel (anwendungsfertige Mittel)
0,2 bis 3 Gew.-%, vorzugsweise
0,5 bis 2 Gew.-%
des 1-Aryl-3-hydroxy-3-alkyl-4-(1,2,4-triazol-1-yl) butanderivates,
0,005 bis 1 Gew.-%, vorzugsweise
0,01 bis 0,5 Gew.-%
des Pyrethroids
und mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und Emulgator und/oder Netzmittel und ggf.
0 bis 5 Gew.-%, vorzugsweise
0,1 bis 3 Gew.-%
Fixierungsmittel und/oder andere Zusatzmittel als Restbestandteil enthält.

5. Mittel zum Konservieren von Holz und Holzwerkstoffen nach einem oder mehreren der Ansprüche 1 bis 3, dadurch gekennzeichnet, daß das Mittel (anwendungsfertige Mittel)
0,2 bis 3 Gew.-%, vorzugsweise
0,5 bis 2 Gew.-%
des 1-Aryl-3-hydroxy-3-alkyl-4-(1,2,4-triazol-1-yl)-butanderivates,
0,005 bis 1 Gew.-%, vorzugsweise
0,01 bis 0,5 Gew.-%
des Pyrethroids,
2 bis 30 Gew.-%, vorzugsweise
5 bis 22 Gew.-% berechnet als Feststoff,
eines Kunstharzbindemittels, vorzugsweise ein Alkydharz und/oder ein trocknendes pflanzliches Öl
sowie mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und Emulgator und/oder Netzmittel
sowie ggf. Sikkative, Farbstoffe, Farbpigmente, Antiabsetzmittel und/oder UV-Stabilisatoren als Restbestandteil enthält.

6. Konzentrat zum Konservieren von Holz und Holzwerkstoffen nach einem oder mehreren der Ansprüche 1 bis 3, dadurch gekennzeichnet, daß das Konzentrat
0,2 bis 25 Gew.-%, vorzugsweise
3 bis 8 Gew.-%,
des 1-Aryl-3-hydroxy-3-alkyl-4-(1,2,4-triazol-1-yl)-butanderivates,
0,05 bis 5 Gew.-%, vorzugsweise
0,5 bis 1 Gew.-%
des Pyrethroids und
5 bis 40 Gew.-%, vorzugsweise
10 bis 30 Gew.-%,
(berechnet als Feststoff) mindestens eines organisch-chemischen Bindemittels und/oder Fixierungsmittels oder Weichmachers sowie
zusätzlich ein organisch-chemisches Lösungsmittel oder Lösungittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder ein Penetrationshilfsmittel und/oder Wasser und einen Emulgator und/oder Netzmittel als Restbestandteil enthält.

7. Mittel oder Konzentrat zum Konservieren von Holz und Holzwerkstoffen nach einem oder mehreren der Ansprüche 1 bis 6, dadurch gekennzeichnet, daß das Mittel oder Konzentrat frei von aromatischen Oxyalkoholen ist.

8. Mittel oder Konzentrat zum Konservieren von Holz und Holzwerkstoffen nach einem oder mehreren der Ansprüche 1 bis 7, dadurch gekennzeichnet, daß ein Teil des organisch-chemischen Lösungsmittels oder Lösungsmittelgemisches durch ein aliphatisches polares organisch-chemisches Lösungsmittel oder Lösungsmittelgemisch, vorzugsweise ein Hydroxy- und/oder Ester- und/oder Äthergruppen enthaltendes aliphatisches organisch-chemisches Lösungsmittel oder Lösungsmittelgemisch ersetzt ist.

## Claims

1. An agent or concentrate for the preservation of wood and timber materials on the basis of or with the joint use of 1-aryl-3-hydroxy-3-alkyl-4-(1,2,4-triazol-1-yl)-butane derivatives of the formula 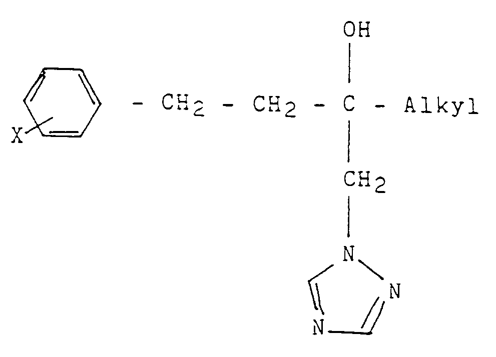 in which X stands for halogen, alkylthio with 1 to 4 carbon atoms or halogen alkoxy with 1 or 2 carbon atoms and 1 to 5 halogen atoms and alkyl stands for an alkyl group with 1 to 4 carbon atoms and/or their acid addition salts and metal salt complexes and at least one solvent, diluent and/or additive, characterised in that the agent or concentrate contains
0.05 - 25% by weight
of the 1-aryl-3-hydroxy-3-alkyl-4-(1,2,4-triazol-1-yl)-butane derivative of the formula 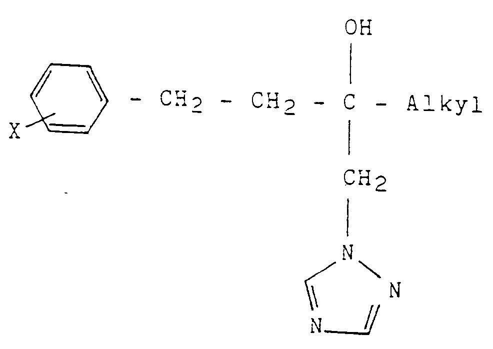 in which X stands for halogen, alkylthio with 1 to 4 carbon atoms or halogen alkoxy with 1 or 2 carbon atoms and 1 to 5 halogen atoms and alkyl stands for an alkyl group with 1 to 4 carbon atoms and/or their acid addition salts and metal salt complexes,
0.002 - 5% by weight
cyano-(4-fluoro-3-phenoxyphenyl)-methyl-3-(2,2-dichloroethenyl)-2,2-dimethylcyclopropane carboxylate, (±)α-cyano-3-phenoxy-benzyl-(±)-cis, trans-3-(2,2-dichlorovinyl)-2,2-dimethylcyclopropane carboxylate, (S)-α-cyano-3-phenoxybenzyl(1R,3R)-3(2,2-dibromovinyl)-2,2-dimethylcyclopropane carboxylate or 3-phenoxybenzyl-(±)-cis-trans-3-(2,2-dichlorovinyl)2,2-dimethylcyclopropane carboxylate or enantiomeric compounds thereof as insecticide (pyrethroid) and
more than 40% by weight
of a mixture of solvent and/or diluent and/or organic-chemical binder and/or fixing agent, processing aid, dye, pigment, dye or pigment mixture.

2. An agent or concentrate according to Claim 1, characterised in that the solvent and/or diluent contains or consists of an organic-chemical solvent or solvent mixture and/or an oily or oil-like, sparingly volatile organic-chemical solvent or solvent mixture and/or a polar organic-chemical solvent or solvent mixture and/or water and at least one emulsifier and/or wetting agent.

3. An agent or concentrate for the preservation of wood and timber materials according to Claims 1 or 2, characterised in that it contains
1-(4-fluoro-)phenyl-3-hydroxy-3-tert.-butyl-4-(1,2,4-triazol-1-yl)-butane,
1-(4-chloro-)phenyl-3-hydroxy-3-tert.-butyl-4-(1,2,4-triazol-1-yl)-butane or
1-(4-bromo-)phenyl-3-hydroxy-3-tert.-butyl-4-(1,2,4-triazol-1-yl)-butane
as the 1-aryl-3-hydroxy-3-alkyl-4-(1,2,4-triazol-1-yl)-butane derivative.

4. An agent for the preservation of wood and timber materials according to one or more of Claims 1 to 3, characterised in that the agent (agent ready for use) contains
0.2 to 3% by weight, preferably
0.5 to 2% by weight,
of the 1-aryl-3-hydroxy-3-alkyl-4-(1,2,4-triazol-1-yl)-butane derivative,
0.005 to 1% by weight, preferably
0.01 to 0.5% by weight,
of the pyrethroid
and at least one organic-chemical solvent or solvent mixture and/or an oily or oil-like, sparingly volatile organic-chemical solvent or solvent mixture and/or a polar organic-chemical solvent or solvent mixture and/or water and emulsifier and/or wetting agent, and optionally
0 to 5% by weight, preferably
0.1 to 3% by weight,
fixing agent and/or other additive as remaining constituent.

5. An agent for the preservation of wood and timber materials according to one or more of Claims 1 to 3, characterised in that the agent (agent ready for use) contains
0.2 to 3% by weight, preferably
0.5 to 2% by weight,
of the 1-aryl-3-hydroxy-3-alkyl-4-(1,2,4-triazol-1-yl)-butane derivative,
0.005 to 1% by weight, preferably
0.01 to 0.5% by weight,
of the pyrethroid,
2 to 30% by weight, preferably
5 to 22% by weight, calculated as solid,
of a synthetic resin binder, preferably an alkyd resin and/or a drying vegetable oil,
and at least one organic-chemical solvent or solvent mixture and/or an oily or oil-like, sparingly volatile organic-chemical solvent or solvent mixture and/or a polar organic-chemical solvent or solvent mixture and/or water and emulsifier and/or wetting agent,
and optionally siccatives, dyes, colour pigments, anti-settling agents and/or UV-stabilisers as remaining constituent.

6. A concentrate for the preservation of wood and timber materials according to one or more of Claims 1 to 3, characterised in that the concentrate contains
0.2 to 25% by weight, preferably
3 to 8% by weight,
of the 1-aryl-3-hydroxy-3-alkyl-4-(1,2,4-triazol-1-yl)-butane derivative,
0.05 to 5% by weight, preferably
0.5 to 1% by weight,
of the pyrethroid and
5 to 40% by weight, preferably
10 to 30% by weight,
(calculated as solid) of at least one organic-chemical binder and/or fixing agent or softener and
additionally an organic-chemical solvent or solvent mixture and/or an oily or oil-like, sparingly volatile organic-chemical solvent or solvent mixture and/or a polar organic-chemical solvent or solvent mixture and/or a penetration aid and/or water and an emulsifier and/or wetting agent as remaining constituent.

7. An agent or concentrate for the preservation of wood and timber materials according to one or more of Claims 1 to 6, characterised in that the agent or concentrate is free of aromatic oxyalcohols.

8. An agent or concentrate for the preservation of wood and timber materials according to one or more of Claims 1 to 7, characterised in that part of the organic-chemical solvent or solvent mixture is replaced by an aliphatic polar organic-chemical solvent or solvent mixture, preferably an aliphatic organic-chemical solvent or solvent mixture containing hydroxy and/or ester and/or ether groups.

## Revendications

1. Agent ou concentré de conservation du bois et des produits dérivés du bois sur base ou par emploi conjoint de dérivés de 1-aryl-3-hydroxy-3-alkyl-4-(1,2,4-triazol-1-yl)-butanes de formule : 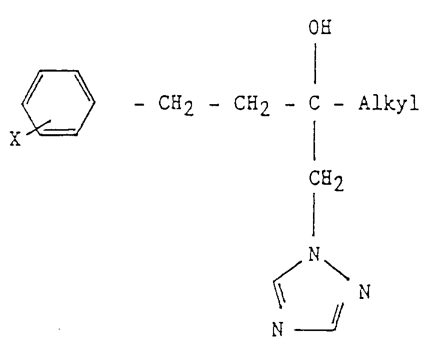 dans laquelle X désigne un halogène, un groupe alkylthio avec 1 à 4 atomes de carbone ou un groupe halogénoalcoxy avec 1 ou 2 atomes de carbone et 1 à 5 atomes d'halogène, et Alkyl désigne un groupe alkyle avec 1 à 4 atomes de carbone, et/ou de sels d'addition de celui-ci avec des acides et de complexes de celui-ci avec des sels métalliques et au moins un solvant, un diluant et/ou un additif, caractérisé en ce que l'agent ou le concentré contient: 0,05 - 25% en poids du dérivé du 1-aryl-3-hydroxy-3-alkyl-4-(1,2,4-triazol-1-yl)-butane de formule: 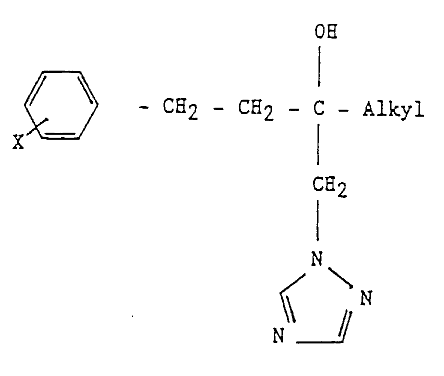 dans laquelle X représente un halogène, un groupe alkylthio avec 1 à 4 atomes de carbone ou un groupe halogénoalkoxy avec 1 ou 2 atomes de carbone et 1 à 5 atomes d'halogène et Alkyl désigne un groupe alkyle ayant 1 à 4 atomes de carbone, et/ou des sels d'addition de celui-ci avec des acides et de complexes de celui-ci avec des sels métalliques, 0,002 - 5 % en poids de carboxylate de cyano-(4-fluoro-3-phénoxyphényl)-méthyl)-3-(2,2-dichloroéthényl)-2,2-diméthylcyclopropane, de carboxylate de (±) α-cyano-3-phénoxybenzyl-(±)-cis, de carboxylate de trans-3-(2,2-dichlorovinyl)-2,2-diméthylcyclopropane, de carboxylate de (S)-α-cyano-3-phénoxybenzyl(1R,3R)-3-(2,2-dibromovinyl)-2,2-diméthylcyclopropane ou de carboxylate de 3-phénoxybenzyl-(±)-cis-trans-3-(2,2-dichlorovinyl)-2,2-diméthylcyclopropane ou de composés énantiomères de ces produits, à titre d'insecticide (pyréthroïde) et plus de 40 % en poids d'un mélange de solvant et/ou de diluant et/ou de liant organo-chimiques et/ou d'agent adhésif, d'agent auxiliaires de traitement, de colorant, de pigment, de mélange de colorants ou de pigments.

2. Agent ou concentré selon la revendication 1, caractérisé en ce que le solvant et/ou le diluant comprennent un solvant ou mélange de solvants organo-chimique et/ou un solvant ou mélange de solvants organo-chimique peu volatil huileux ou oléiforme et/ou un solvant ou mélange de solvants organo-chimique polaire et/ou de l'eau et au moins un émulsionnant et/ou un agent réticulant ou est constitué de ceux-ci.

3. Agent ou concentré de conservation du bois et des produits dérivés du bois selon la revendication 1 ou 2, caractérisé en ce qu'il comprend comme dérivé
de 1-aryl-3-hydroxy-3-alkyl-4-(1,2,4-triazol-1-yl)-butane,
le 1-(4-fluoro-)phényl-3-hydroxy-3-tert.-butyl-4-(1,2,4-triazol-1-yl)-butane,
le 1-(4-chloro)phényl-3-hydroxy-3-tert.-butyl-4-(1,2,4,-triazol-1-yl)-butane ou
le 1-(4-bromo-phényl-3-hydroxy-3-tert.-butyl-4-(1,2,4-triazol-1-yl)-butane.

4. Agent de conservation du bois et des produits dérivés du bois selon une ou plusieurs des revendications 1 à 3, caractérisé en ce que l'agent (prêt à l'emploi) comprend:
0,2 à 3% en poids, de préférence
0,5 à 2% en poids
du dérivé de 1-aryl-3-hydroxy-3-alkyl-4-(1,2,4-triazol-1-yl)-butane,
0,005 à 1% en poids, de préférence
0,01 à 0,5% en poids
du pyréthroïde,
et au moins un solvant ou mélange de solvants organo-chimique et/ou un solvant ou mélange de solvants organo-chimique peu volatil huileux ou oléiforme et/ou un solvant ou mélange de solvants organo-chimique polaire et/ou de l'eau et un émulsionnant et/ou un agent de réticulation et éventuellement 0 à 5% en poids, de préférence
0,1 à 3% en poids
d'un agent adhésif et/ou d'un autre additif pour constituer le reste de l'agent.

5. Agent de conservation du bois et des produits dérivés du bois selon une ou plusieurs des revendications 1 à 3, caractérisé en ce que l'agent (prêt à l'emploi) comprend:
0,2 à 3% en poids, de préférence
0,5 à 2% en poids
du dérivé du 1-aryl-3-hydroxy-3-alkyl-4-(1,2,4-triazol-1-yl)-butane,
0,005 à 1% en poids, de préférence
0,01 à 0,5% en poids
du pyréthroïde,
2 à 30% en poids, de préférence
0,01 à 0,5% en poids
du pyréthroïde,
2 à 30% en poids, de préférence
5 à 22% en poids, calculés sur base de matière solide, d'un agent liant dérivé d'une résine synthétique, de préférence une résine alkyde et/ou une huile végétale siccative ainsi qu'au moins un solvant ou mélange de solvants organo-chimique et/ou un solvant ou mélange de solvants organo-chimique peu volatil huileux ou oléiforme et/ou un solvant ou mélange de solvants organo-chimique polaire et/ou de l'eau et un émulsionnant et/ou un agent de réticulation, ainsi qu'éventuellement des siccatifs, des colorants, des pigments colorés, des agents anti-dépôt et/ou des stabilisants aux UV pour constituer le reste de l'agent.

6. Concentré de conservation du bois et des produits dérivés du bois selon une ou plusieurs des revendications 1 à 3, caractérisé en ce que le concentré contient:
0,2 à 25% en poids, de préférence
3 à 8% en poids,
du dérivé de 1-aryl-3-hydroxy-3-alkyl-4-(1,2,4-triazol-1-yl)-butane,
0,05 à 5% en poids, de préférence
0,5 à 1% en poids
du pyréthroïde et
5 à 40% en poids, de préférence
10 à 30% en poids
(calculé sur base de matière solide) d'au moins un liant et/ou un agent adhésif organo-chimique ou un plastifiant ainsi que en plus un solvant ou mélange de solvants organo-chimique et/ou un solvant ou mélange de solvants organo-chimique peu volatil huileux ou oléiforme et/ou un solvant ou mélange de solvants organo-chimique polaire et/ou un agent auxiliaire de pénétration et/ou de l'eau et un émulsionnant et/ou un agent de réticulation pour constituer le reste de l'agent.

7. Agent ou concentré de conservation du bois et des produits dérivés du bois selon une ou plusieurs des revendications 1 à 6, caractérisé en ce que l'agent ou le concentré est exempt d'oxyalcools aromatiques.

8. Agent ou concentré de conservation du bois et des produits dérivés du bois selon une ou plusieurs des revendications 1 à 7, caractérisé en ce qu'une partie du solvant ou mélange de solvants organo-chimique est remplacée par un solvant ou mélange de solvants organo-chimique polaire aliphatique, de préférence un solvant ou mélange de solvants organo-chimique aliphatique contenant des groupes hydroxy et/ou des groupes ester et/ou des groupes éther.
